# EUROPEAN PATENT SPECIFICATION

(11) **EP 2 465 163 B1**
(45) Date of publication and mention of the grant of the patent: **01.11.2017**
(21) Application number: 10728550.4
(22) Date of filing: 25.06.2010
(51) Int. Cl.: H01M 12/08, H01M 14/00, H01M 12/00, H01M 8/124

(54) **ELECTRICAL STORAGE DEVICE INCLUDING OXIDE-ION BATTERY CELL BANK AND MODULE CONFIGURATIONS**
ELEKTROSPEICHERVORRICHTUNG MIT OXID-IONEN-BATTERIEZELLBANK UND MODULKONFIGURATIONEN
DISPOSITIF DE STOCKAGE ÉLECTRIQUE COMPRENANT UN BLOC D'ÉLÉMENT DE CELLULE DE BATTERIE ION-OXYDE ET CONFIGURATIONS DE MODULE

(30) Priority: 10.08.2009 US 232533 P; 28.01.2010 US 695386
(43) Date of publication of application: 20.06.2012
(73) Proprietor: Siemens Aktiengesellschaft, 80333 München (DE)
(72) Inventor: HUANG, Kevin, Export Pennsylvania 15632 (US); VORA, Shailesh, D., Monroeville Pennsylvania 15146 (US); TARTIBI, Mehrdad, Winter Springs Florida 32708 (US); VORTMEYER, Nicolas, 91054 Erlangen (DE); LITZINGER, Kevin, P., Level Green Pennsylvania 15085 (US); LU, Chun, Sewickley Pennsylvania 15143 (US); SUESS, Michael, Josef, 82319 Starnberg (DE)
(74) Representative: Maier, Daniel Oliver
(86) International application number: PCT/US2010/039919
(87) International publication number: WO 2011/019455

(56) References cited:
- WO-A2-01/80335
- JP-A- 2008 135 238
- US-A- 3 977 901
- US-A- 4 042 755
- US-A- 4 054 729
- US-A1- 2004 241 537
- US-A1- 2008 268 327
- US-B2- 6 905 794
- C A VINCENT AND B SCROSATI: "MODERN BATTERIES" 1997, Butterworth Heinemann , England , XP002599561 ISBN: 0340662786 , pages 290-300 the whole document

## Description

### Cross Reference To Related Application

This application claims priority under 35 U.S.C. §119(e) to U.S. Provisional Patent Application Serial No. 61/232,533, filed August 10, 2009 entitled, ELECTRICAL STORAGE DEVICE INCLUDING OXIDE-ION BATTERY CELL BANK AND MODULE CONFIGURATIONS.

### BACKGROUND OF THE INVENTION

### 1. Field of the Invention

An electrical storage device comprising anion conducting electrolyte, where there is ion transfer between electrodes on either side of the electrolyte. This present invention also relates to a module, bank of cells, and cell electrochemical configuration for storing electrical energy using electrolyte oxide-ion conductors, where there is oxide-ion transfer between two electrodes.

### 2. Description of Related Art

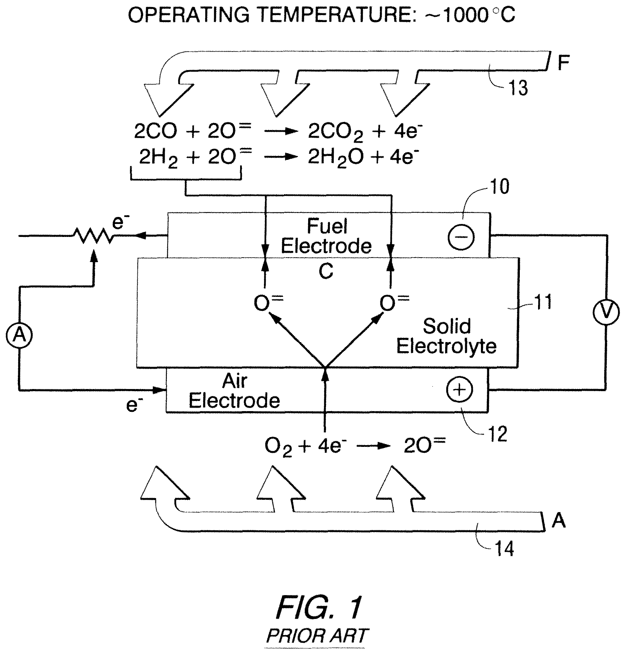

High temperature solid oxide electrolyte fuel cells are well known in the art and convert chemical energy into direct current electrical energy, typically at temperatures above about 500°C. This temperature is required to render the solid electrolyte sufficiently conductive. Stabilized zirconia is a prime electrolyte. Such fuel cells are taught, for example, by U.S. Patent No. 4,395,468 (*Isenberg*)*.* The general working principles and general reactions of a solid oxide fuel cell ("SOFC") are shown in prior art Fig. 1, which is self-explanatory. Air and a required gaseous fuel, such as natural gas, are both utilized solely to generate electricity at about 800°C to about 1,000°C. This type SOFC utilizes metal/ceramic fuel electrodes 10, gaseous reformed natural gas fuel and ceramic, dense solid electrolyte 11 and porous ceramic air electrode 12. No metals are used as only ceramics or metal ceramics can withstand these high temperatures. Fuel 13 is shown by F and oxidant or air A is shown by 14.

An encyclopedic publication by N. Q. Minh, in Ceramic Fuel Cells, J. Am. Ceramic Soc., 76[3] 563-588, 1993 describes in detail a variety of fuel cell designs, including tubular, triangular and other configurations, as well as materials used and accompanying electrochemical reactions. For example, that article describes segmented cell-in-series (banded and bell-and-spigot), monolithic (co-flow and crossflow), and flat-plate designs in substantial detail. Cermet fuel electrode (anode) materials, such as nickel or cobalt/yttria stabilized zirconia are also discussed as well as their coefficient of thermal expansion problems.

In addition to generating energy, batteries also store it. Electrical energy storage is crucial for the effective proliferation of an electrical economy and for the implementation of many renewable energy technologies. During the past two decades, the demand for the storage of electrical energy has increased significantly in the areas of portable, transportation, and load-leveling and central backup applications. The present electrochemical energy storage systems are simply too costly to penetrate major new markets, still higher performance is required, and environmentally acceptable materials are preferred. Transformational changes in electrical energy storage science and technology are in great demand to allow higher and faster energy storage at the lower cost and longer lifetime necessary for major market enlargement. Most of these changes require new materials and/or innovative concepts with demonstration of larger redox capacities that react more rapidly and reversibly with cations and/or anions.

Batteries are by far the most common form of storing electrical energy, ranging from: standard every day lead - acid cells, exotic iron-silver batteries for nuclear submarines taught by *Brown* in U.S. Patent No. 4,078, 125 and nickel-metal hydride (NiMH) batteries taught by *Venkatesan et al.* in U.S. Patent No. 5,856,047, *Kitayama* in U.S. Patent No. 6,399,247 B1 and *Young et al.* in U.S. Patent No. 7,261,970. Also known are metal-air cells taught in U.S. Patent No. 3,977,901 (*Buzzelli*)*, Isenberg* in U.S. Patent No. 4,054,729, U.S. Patent Publications 2006/0063051; 2007/0077491; 2007/0259234 (Jang, Burchardt and Chua *et al,* respectively) and air batteries also taught in U.S. Patent Publications 2003/0143457 and 2004/0241537 (*Kashino et al.* and *Okuyama et al.,* respectively). Lithium-ion batteries are taught by Ohata in U.S. Patent No. 7,396,612 B2. These latter metal-air, nickel-metal hydride and lithium-ion battery cells require liquid electrolyte systems.

Batteries range in size from button cells used in watches, to megawatt loading leveling applications. They are, in general, efficient storage devices, with output energy typically exceeding 90% of input energy, except at the highest power densities. Rechargeable batteries have evolved over the years from lead-acid through nickel-cadmium and nickel-metal hydride (NiMH) to lithium-ion. NiMH batteries were the initial workhorse for electronic devices such as computers and cell phones, but they have almost been completely displaced from that market by lithium-ion batteries because of the latter's higher energy storage capacity. Today, NiMH technology is the principal battery used in hybrid electric vehicles, but it is likely to be displaced by the higher power energy and now lower cost lithium batteries, if the latter's safety and lifetime can be improved. Of the advanced batteries, lithium-ion is the dominant power source for most rechargeable electronic devices.

C.A. Vincent and B. Scrosati. "Modern Batteries", 1997, Butterworth-Heinemann, England, ISBN: 0340662786 describes ion air cells and zinc-air cells in which aqueous KOH is used as electrolyte. It also describes metal-halogen cells in which aqueous ZnCl₂ is used.

US 3,977,901 describes metal/air cells in which an aqueous alkali hydroxide electrolyte is used.

In US 2008/268327 A1 a metal-air battery with a solid cation conducting electrolyte is described. An aqueous catholyte solution is used as ion storage for storing alkali metal ions.

US 4,042,755 describes an apparatus for electrochemical generation of power from hydrogen. A molten salt is used in this apparatus as electrolyte.

US 4,054,729 describes a rechargeable high temperature electrochemical battery in which a halide salt is used as electrolyte. At the operating temperature of the cell the electrolyte salt mixture is molten.

What is needed is a dramatically new electrical energy storage device that can easily discharge and charge a high capacity of energy quickly and reversibly, as needed. What is also needed is a device that is simple and that can operate for years without major maintenance. What is also needed is a device that does not need to operate on carbonaceous fuel gases such as natural gas fuel, hydrocarbon fuel or its reformed by-products such as H₂ fuel. This device must have:
- a simple cell and module structure;
- in one embodiment, greater than about 400°C to 500°C operating temperature to achieve facile kinetic for discharging and charging interfacial reactions;
- high theoretical energy density;
- all solid state components;
- low system cost; and
- low power-loss current collection.

It is a main object of this invention to provide battery cells, cell banks and module configurations that supply the above needs.

### SUMMARY OF THE INVENTION

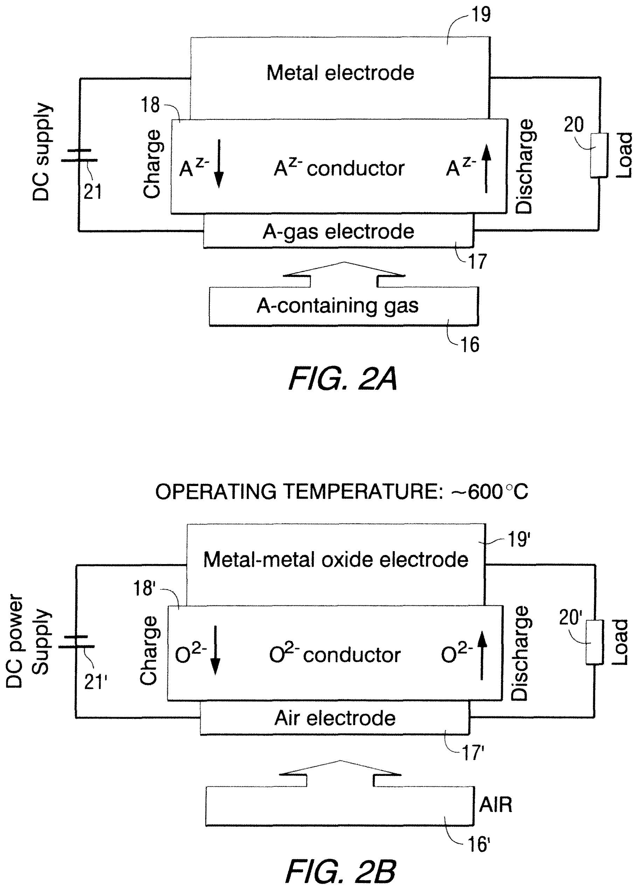

The above needs are supplied and object accomplished by providing an electrical storage device comprising a solid anion conducting electrolyte and two electrodes, where there is O²⁻ ion transfer anion between electrodes on either side of the electrolyte, where one electrode is a reservoir for anions and were anions can transfer back and forth between electrodes. Here, no gaseous fuels are needed for operation. Basic operation is shown in FIGS. 2A and 2B discussed later.

The above needs are also supplied and object accomplished by providing a bank of cells using metallic electrodes in combination with oxide-ion electrolyte conductors, capable of operating in a charging and discharging mode, to store electrical energy in the metallic electrodes, where, the discharging mode is:

yMe + x/2 O₂ = Me_{y}Oₓ

and the charging mode is:

Me_{y}Oₓ = x/2 O₂ + yMe,

where x/y = 0.5 to 3.0, and Me = metal.

The invention also resides in a bank of cells comprising a plurality of electrically connected solid or hollow elongated tubular cells, each cell capable of operating in a charging and discharging mode, each cell comprising a single phase or two-phase metallic material which can be oxidized for use as a first electrode having a melting point over 400°C, and, a second electrode material which can transfer air to an electrolyte, and an electrolyte therebetween that can transfer oxide ions, where the metallic first electrode is a reservoir of oxygen, and where the discharging mode is:

yMe +x/2 O₂ = Me_{y}Oₓ,

and in the charging mode is:

Me_{y}Oₓ= x/2 O₂ + yMe,

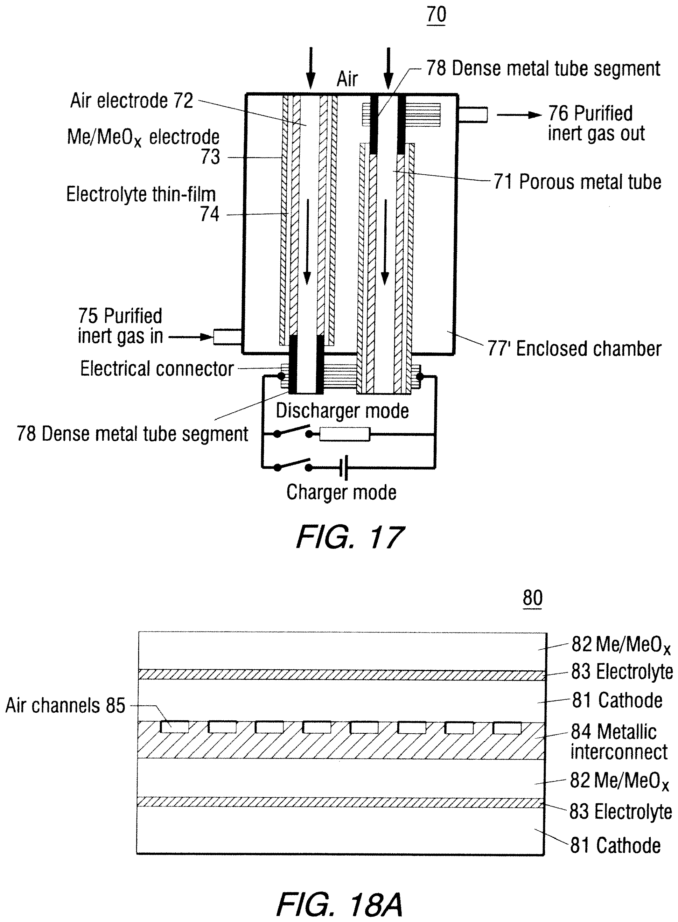

where x/y = 0.5 to 3.0, where Me = metal, and where the bank of cells store electrical energy, and have a source of air to contact the second electrode material. Preferably, a plurality of the bank of cells can be connected to ultimately provide a module. Preferably, the metallic first electrode has a melting point over 500°C. It is important to note that no gaseous fuels are used. Additionally, a planar geometry, such as shown in FIG. 18A can be used. This is applicable to all the banks of cells described herein.

The term "reservoir" as used herein is defined to mean that species relevant to anions can be captured/held in the electrode and capable of release. The term "hollow elongated tubular cells" is defined later in the text. Oxide ions are O²⁻. The term "solid cells" includes tubular, triangular and any other geometric configuration such as cross-sections that are square, triangular, etc.

The invention further resides in a storage module comprising a plurality of electrically interconnected bank of cells, each bank of cells comprising a plurality of electrically connected hollow elongated tubular cells, each cell capable of operating in a charging and discharging mode, each cell comprising a single phase or two-phase metallic material which can be oxidized for use as a first electrode having a melting point over 500°C, and, a second electrode material which can transfer air to an electrolyte, and an electrolyte therebetween that can transfer oxygen ions, where the metallic first electrode is a reservoir of oxygen, and where the discharging mode is:

yMe +x/2 O₂ = Me_{y}Oₓ,

and the charging mode is:

Me_{y}Oₓ= x/2 O₂ + yMe,

x/y = 0.5 to 3.0, where Me = metal, and where the cell banks store electrical energy, and have a source of air to contact the second electrode material. This storage module can effectively operate at a moderate/high temperatures of from 550°C to 650°C.

### BRIEF DESCRIPTION OF THE DRAWINGS

For a better understanding of the invention, reference may be made to the preferred embodiments exemplary of this invention, shown in the accompanying drawings in which:
FIG. 1 illustrates the working principals of prior art SOFC's;
FIG. 2A illustrates the broadest example of the energy storage device of this invention based on an anion A conductor which utilizes A- containing gas and eliminates the need for gaseous fuel.
FIG. 2B illustrates the working principals of one embodiment of the electrical energy storage device of this invention, which utilizes air and eliminates the need for gaseous fuel;
FIG. 3 illustrates an example of both electrode reactions of the electrical energy storage device of this invention;
FIGS. 4A-C illustrate various possible tubular cell configurations that can be used in this invention, including a solid interior metal electrode substrate;
FIG. 5 is a graph of EMF (vs. Air, volt) vs. T(K) for various metal and oxide materials;
FIG. 6 is a graph of theoretical energy density vs. T(K), for various metal and oxide materials;
FIG. 7 is a graph of thermodynamic electrical efficiency vs. T (K) for various metal and oxide materials;
FIG. 8 is a graph of cost ($/kWeh) vs. T (K) for various metal and oxide materials;
FIG. 9 is a graph of maximum current density vs. time, for various metallic materials;
FIG. 10A is a graph of maximum ampere hour vs. various metallic materials with a cell active area of 850 cm².
FIG. 10B is a graph of maximum ampere hour per cm² vs. various metallic materials.
FIG. 11 is a schematic diagram of two parallel mechanisms of metal oxidation occurring in the metal electrode during the discharge process, where a mixed conducting phase is only considered at the interface;
FIG. 12 is a schematic diagram of two parallel mechanisms of metal oxidation occurring at the metal electrode during the discharge process, where a mixed conducting phase is considered in the bulk;
FIG. 13 is a schematic of metal electrode particles contained in an electrolyte interface skeleton of a volume stable mixed conducting material;
FIG. 14 is a schematic of separated metal electrode and current collector with metal sponges being oxidized by gas-phase O₂;
FIG. 15 is a schematic of a graded metal electrode structure to control/mitigate any volume expansion problems during metal oxidation, to protect the electrolyte.
FIG. 16 is a schematic sectional view of the basic repeating oxide-ion battery cell units in a tubular module based on porous air electrode substrates;
FIG. 17 is a schematic sectional view showing the basic repeating oxide battery cell unit in a tubular module based on porous metal substrates;
FIG. 18A is a schematic sectional view of the basic repeating oxide-ion battery cell units in a planar module;
FIG. 18B is a schematic sectional view of the basic repeating oxide-ion battery cell units in a delta or triangular module;
FIG. 19 is a schematic of basic repeating unit of oxide-ion battery module using chemical charge.
FIG. 20, which best shows the invention, is a schematic view of a bank of cells of each cell brazed into tube sheets with the cells in parallel and bank of cells in series;
FIG. 21 illustrates one embodiment in a three-dimensional view of a bank of cells connected in electrical series; and
FIG. 22 is a three-dimensional view of one embodiment of a cell module.

### DESCRIPTION OF THE PREFERRED EMBODIMENTS

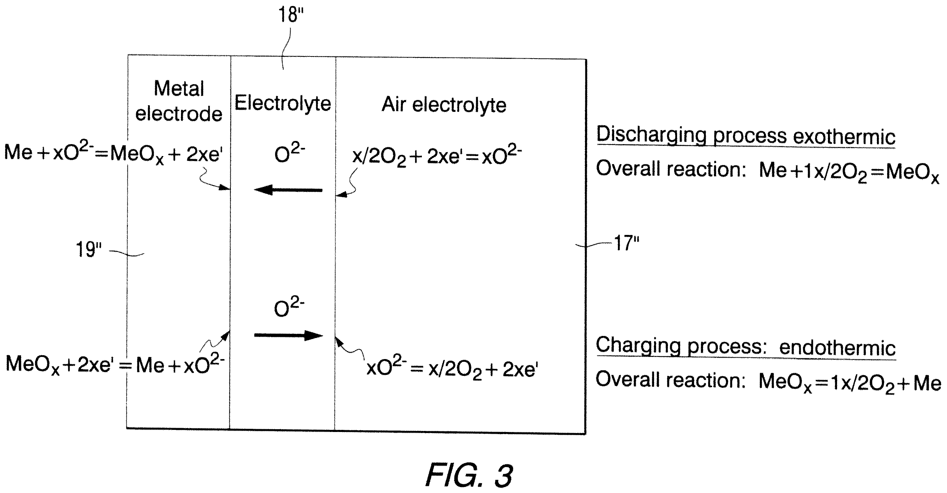

The broadest working principle of the electrical storage device of this invention is shown in FIG. 2A, where a non-fuel containing gas 16 contacts an A-gas electrode 17 and where an A conducting conductor/electrolyte 18 is disposed next to the A-gas electrode and a metallic electrode 19 where there is an electrical circuit, a load 20 and a DC supply 21. Here, there is an anion conducting electrolyte where there is ion transfer between electrodes on either side of the electrode, such ions are selected from at least one of O²⁻, CO²⁻, S²⁻, PO₄³⁻, I⁻, F⁻, and Cl⁻. The working principle of one embodiment of the oxide-ion battery configuration of this invention is schematically shown in Fig. 2B. In discharge mode, oxide-ion anions migrate from high partial pressure of oxygen side (air side in this case) to low partial pressure of oxygen side (metal-metal oxide electrode) under the driving force of gradient of oxygen chemical potential. In charge mode, the oxide-ions are forced to migrate from low partial pressure of oxygen side to high partial pressure of oxygen side under the driving force of electrical field. Here, air 16' contacts air electrode 17'. Oxygen ion conductor electrolyte is between the air electrode and metallic (metal-metal oxide) electrode 19'. Load is shown as 20', and D.C. power supply 21'. The corresponding electrode reactions occurring during charge and discharge course are illustrated in Fig. 3. Under the discharge mode metal is oxidized into metal oxide with exothermic heat whereas under the charge mode metal oxide is reduced into metal with endothermic heat. The discharging process is, where Me = metal:

yMe + x/2 O₂ = Me_{y}Oₓ,

and the charging process is:

Me_{y}Oₓ = x/2 O₂ + yMe,

where x/y is preferably from 0.5 to 3.0. Here, air electrode is shown as 17", electrolyte as 18" and metal electrode as 19".

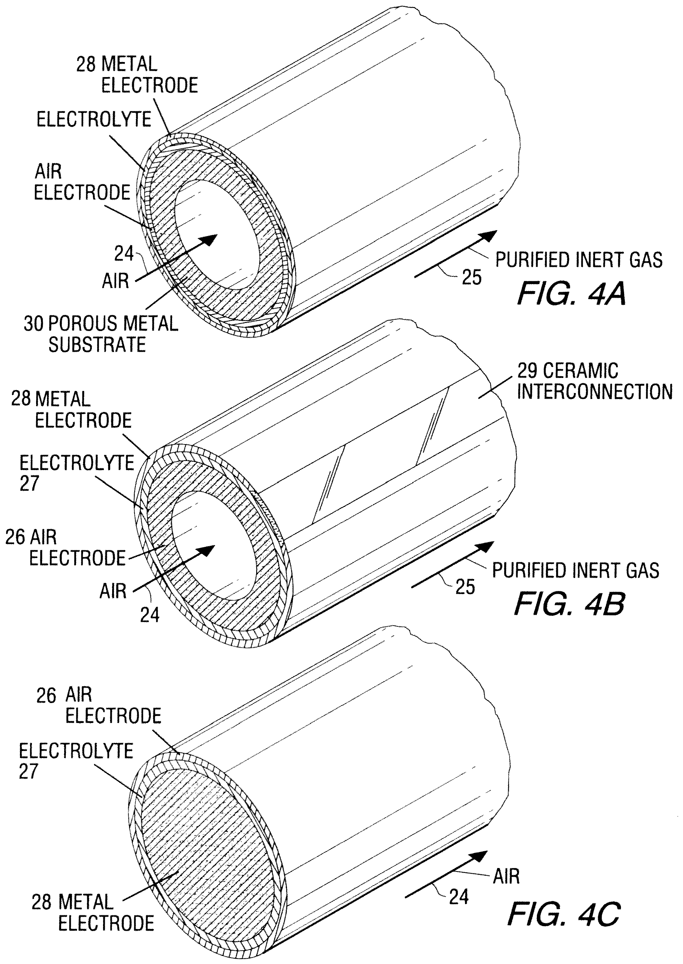

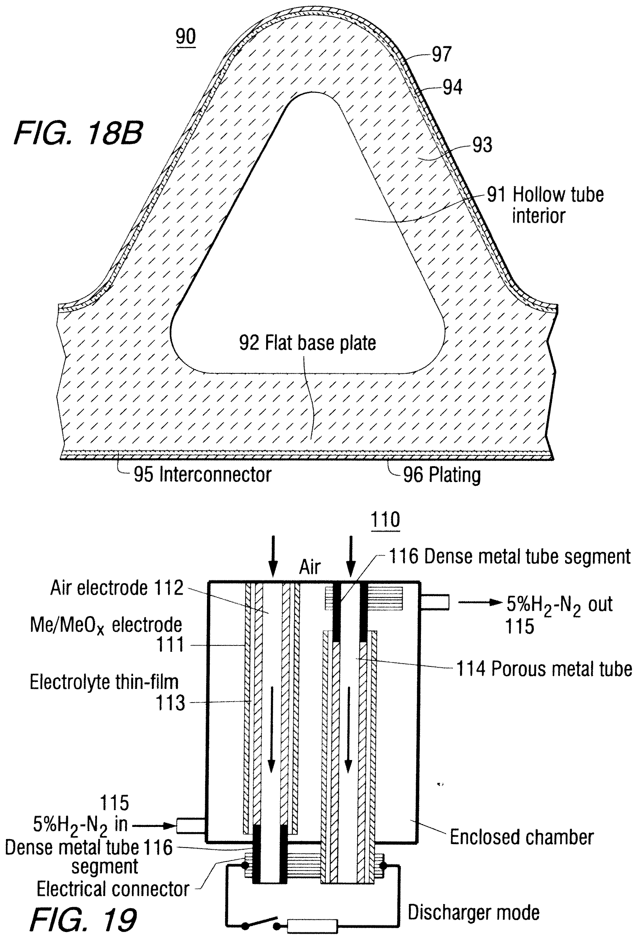

Tubular cell configurations are preferred and will be illustrated throughout for simplicity. However, this should not be construed in any way as restrictive, as other "hollow, elongated tubular cell" structures are herein included, as are described by *Isenberg,* in U.S. Patent No. 4,728,584 - a corrugated design, and by U.S. Patent Application Publication No. U.S. 2008/0003478 A1 (Greiner et al.) *-* a triangular, quadrilateral, oval, stepped triangle and meander, are all herein defined as "hollow elongated tubular" cells. A variety of hollow elongated tubular cell designs for use in this invention are shown in FIGS. 4A, 4B and 4C. Also, triangular "delta type cells" - FIG. 18B can be useful. In FIGS. 4A, 4B and 4C air or oxidant is 24, purified inert (non-fuel) gas is 25, air electrode is 26, electrolyte is 27, metal electrode is 28, ceramic interconnection is 29 and metal "substrate" is 30. Due to the complex nature of the invention there will be some back and forth review of the figures.

A cell configuration, in a tubular fashion is displayed in FIG. 4A, but no fuel gas is used, only air. There are a total of four functional layers: inner porous metal support substrate 30, air electrode 26, electrolyte 27 and outer metal electrode 28. The porous metal substrate tube is "once through". The oxidant air is fed into the inner surface of the porous metal tube. The outer metal or metallic electrode stays in an enclosed environment protected by an inert gas.

The porous metal substrate 30, of FIG. 4A, can be comprised of ferritic stainless steel containing mainly Fe, Cr and Mn metal and minor additives such as Ti, Nb, Zr, Ce, La and Y. The air electrode layer can comprise a two-phase mixture of electronic conducting phase LaMnO₃-based perovskites and oxide-ion conducting phase Scandia-doped Zirconia. The electrolyte layer can comprise a single phase comprising of Scandia-doped Zirconia.

The porous metal substrate can also be substituted by a porous air electrode. The air electrode 26, in FIG. 4B, which can comprise Ca-doped LaMnO₃. In this case, a ceramic interconnection strip, comprising of Ca-doped LaCrO₃ or the like, is also needed on the elongated tubular surface. FIG. 4B shows the sectional view of this air electrode supported oxide-ion battery configuration, again, no fuel gas is used.

Another cell configuration is schematically shown in FIG. 4C. In FIG. 4C a metal electrode tube or solid rod 28 is used as an example of the supporting substrate with air external to the cell with no fuel gas used. The solid center metal electrode 28 can be circular, square, irregular or any geometric shape, thus the term "solid cells" as used herein can be any of those shapes. The metal electrode rod can either be dense or porous. Electrolyte and air electrode layers are sequentially deposited on the metal electrode substrate. In this design, protective inert gas is no longer necessary. The most important component of the cell of this invention is the metallic electrode 28 which serves as a reservoir of oxygen. Besides the requirement of having a melting point over 400°C, other important criteria are:
thermodynamic EMF (electromotive force);
theoretical energy density (MJoule/kg metal);
thermodynamic electrical efficiency;
cost ($/kWatt electrical hours eh) [e = electricity; h = hour];
maximum current density (determines performance); and
maximum charge storage (ampere hour/cm²).

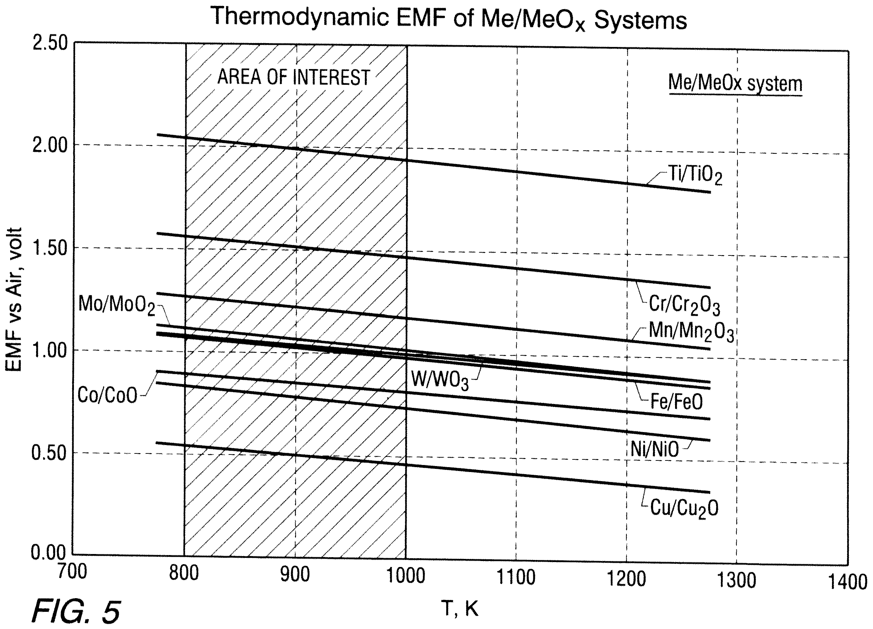

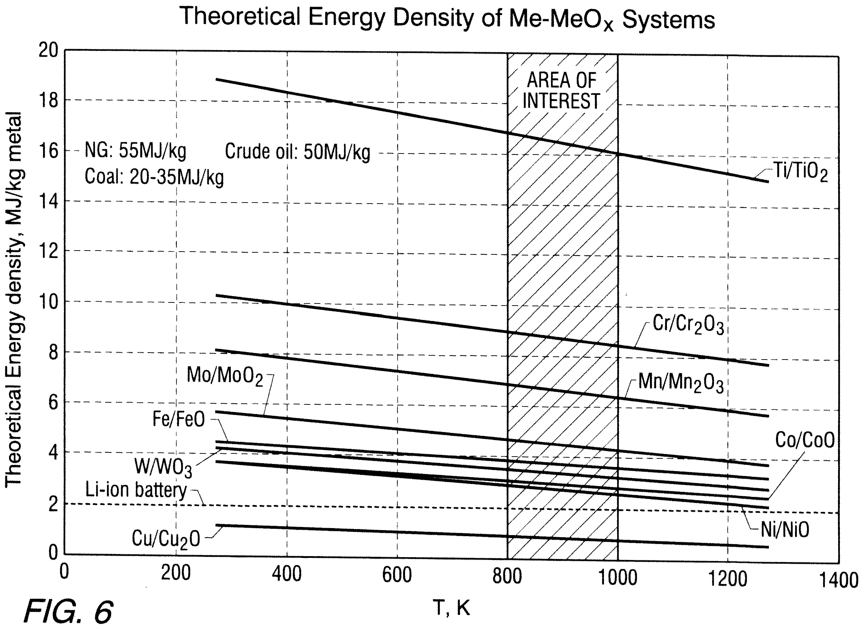

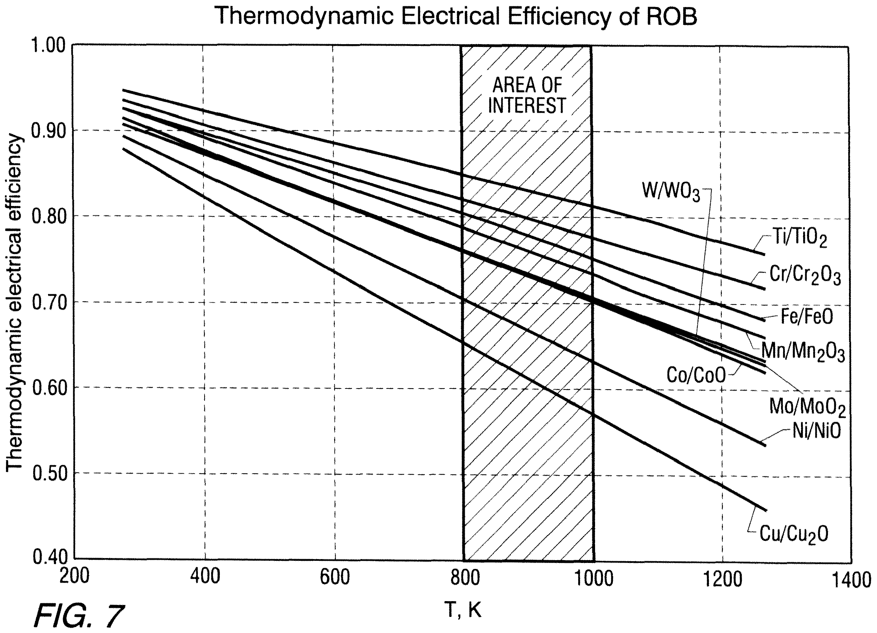

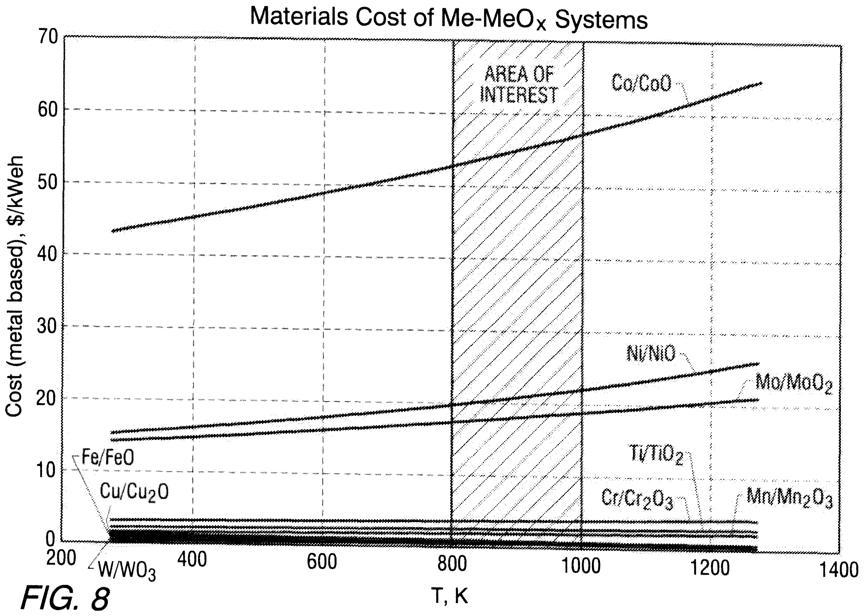

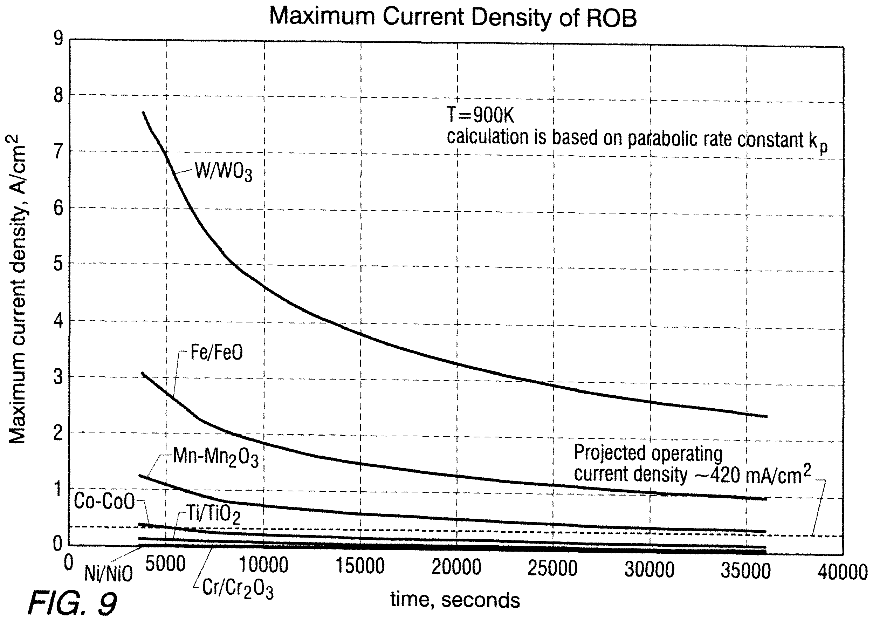

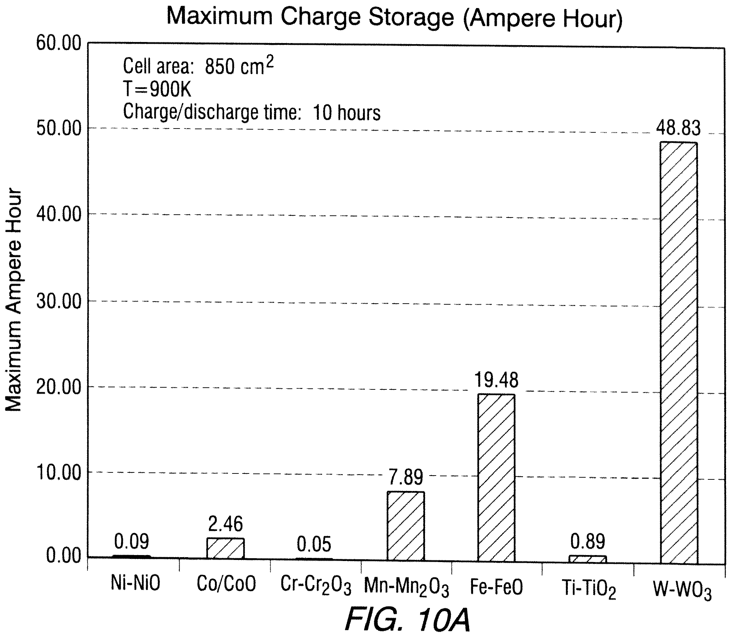

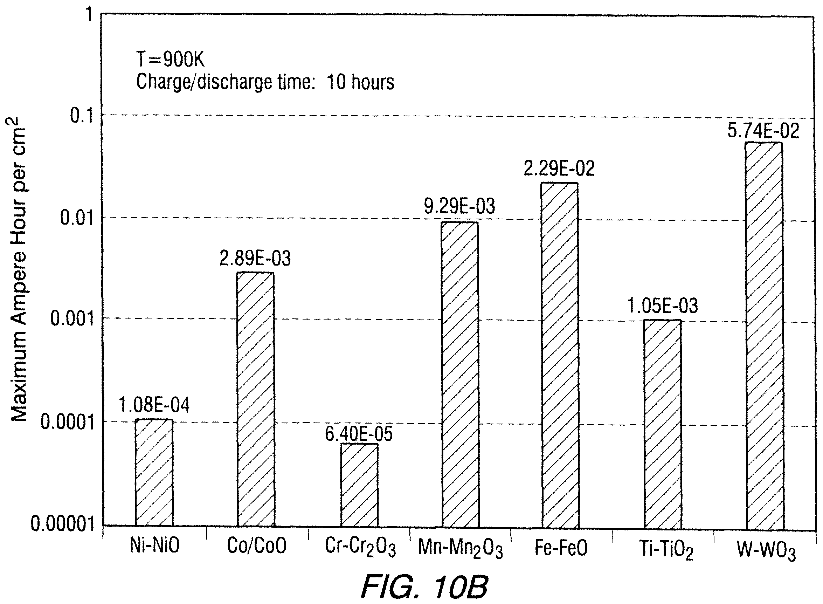

Based on these considerations, the metal electrode can be comprised of any single-phase metallic material among Sc, Y, La, Ti, Zr, Hf, Ce, Cr, Mn, Fe, Co, Ni, Cu, Nb, Ta, V, Mo, Pd and W, and of any two-phase material among Sc-Sc₂O₃, Y-Y₂O₃. La-La₂O₃. Ti-TiO₂. Zr-ZrO₂, Hf-HfO₂, Ce-CeO₂, Cr-Cr₂O₃, Mn-Mn₂O₃, Mn-Mn₃O₄, Mn-MnO, Fe-FeO, Fe-Fe₃O₄, Fe-Fe₂O₃, Co-CoO, Co-Co₃O₄, Co-Co₂O₃, Ni-NiO, Cu-Cu₂O, Cu-CuO, Nb-NbO, Nb-NbO₂, Nb-Nb₂O₅, Ta-Ta₂O₅, V-V₂O₅, V-VO₂, V-V₂O₃, V-VO, Mo-MoO₂, Mo-MoO₃, Pd-PdO and W-WO₃. In the two-phase composition, the metal-to-metal oxide ratio ranges from 0:100 to 100:0, and more narrowly, 50:50 to 100:0. However, to determine the preferred materials the above criteria were further considered and candidates are shown in FIGS. 5-10A and 10B, all of which are self explanatory. FIG. 5 shows high EMF values in systems of Ti/TiO₂, Cr/Cr₂O₃, Mn/Mn₂O₃, Mo/MoO₂, Fe/FeO, W/WO₃. FIG. 6 further shows high specific energy density in systems of Ti/Ti₂O₂, Cr/Cr₂O₃, Mn/Mn₂O₃, Mo/MoO₂ and Fe/FeO. FIG. 7 further shows high thermodynamic electrical efficiency within the temperature range of interest in systems of Ti/TiO₂ Cr/Cr₂O₃, Fe/FeO, Mn/Mn₂O₃ and Fe/FeO. FIG. 8 further shows, where lower is better - costs. Excellent cost candidates are W/WO₃, Fe/FeO, Mn/Mn₂O₃, Cu/Cu₂O, Ti/TiO₂ and Cr/Cr₂O₃. FIG. 9 further shows high maximum current density is achievable in systems of W/WO₃, Fe/FeO, Mn/Mn₂O₃, and Co/CoO. FIGS. 10A and 10B further show high maximum storage capacity in systems of W/WO₃, Fe/FeO, and Mn/Mn₂O₃. Based on this data and other considerations, the preferred metallic electrode would preferably contain at least one of single phase metallic materials among Ti, Cr, Mn, Fe, Co, Ni, Cu, Mo and W and any two-phase material among Ti-TiO₂, Cr-Cr₂O₃, Mn-Mn₂O₃, Fe-FeO, Co-CoO, Ni-NiO, Cu-Cu₂O, Mo-MoO₂ and W-WO₃; with most preferred materials being at least one of Fe/FeO, Mn/Mn₂O₃, W/WO₃, and Mo/MoO₂; with W/WO₃, the prime candidate at this time. From a broad point of view, the metallic electrode is comprised of any combination of a two-and-greater-than-two metal formed alloy and any of any combination of a two-and-greater-than-two oxide formed solid solution. Additionally, the second air electrode can be any solid phase that holds a fixed partial pressure of oxygen at a fixed temperature and the oxidant gas feed can be any oxygen containing gas.

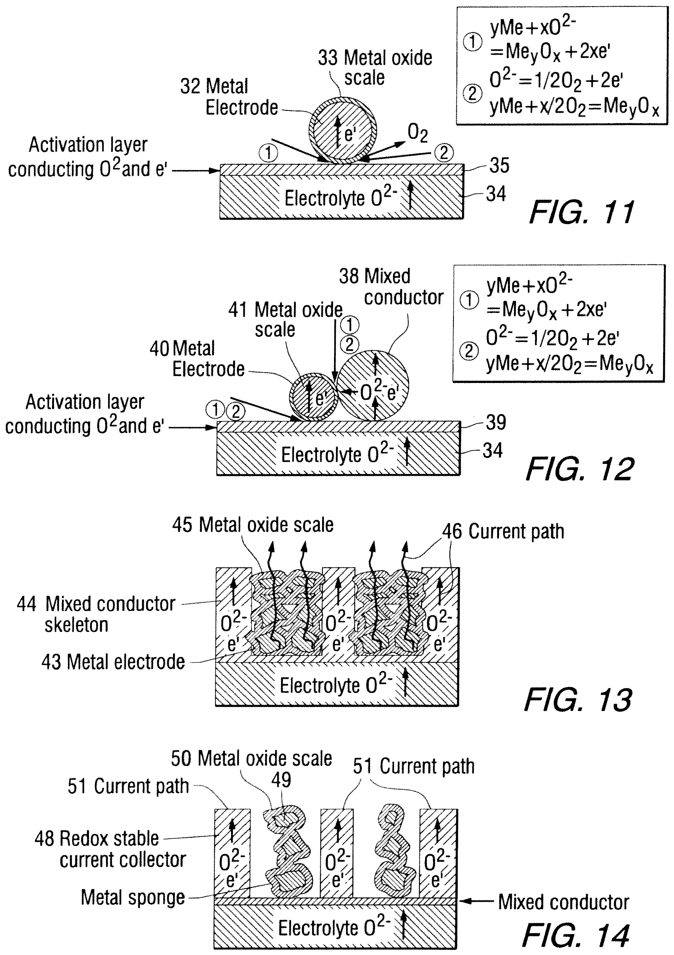

The metal oxidation occurring -- which involves oxide scale formation and, as is well known, expansion in metal volume during discharging process can be understood in two parallel chemical mechanisms as shown in FIG. 11. Mechanism -1 is the solid-state electrochemical oxidation of the metal electrode 32 to form metal oxide scale 33. The reaction can be written as yMe+xO²=Me_{y}Oₓ+2xe', preferably occurring at the triple phase boundary at the interface 35 between electrolyte (O²⁻) 34 and metal/electronically conducting oxide scale (e'). Mechanism-1 continues as long as the formed conducting oxide scale, that is e', has the ability to conduct both O²⁻ and e'. Mechanism-2 involves gas-phase oxidation of metal, in which molecular O₂ is first generated in pores at the triple phase boundaries, giving off electrons to metal oxide scale and bulk metal. The electrochemical reaction can be expressed as O²⁻=1/2O₂+2e', followed by gas-phase reaction yMe+x/2O₂=Me_{y}Oₓ. The continuation of this oxidation process relies on both electrical properties and microstructure of the formed oxide scale. Mixed O²⁻ and e' conductor and porous structure are two favorable factors for a faster gas-phase oxidation. Two simultaneous mechanisms eventually produce a complete coverage of oxide scales 33 on the surface of metal particles on the electrode. For both cases, the electrical current has to be collected through the oxide scales and metal particles. Therefore, the electrical properties of the formed oxide scale are vitally important for metal electrode to function well. If the formed oxide is a poor electrical conductor, the oxygen flux or current will stop rapidly.

The mixed conducting phase shown at the electrolyte interface in FIG. 11 can also be extended into the bulk of the metal electrode. FIG. 12 shows the schematic of such an arrangement. The reaction surface areas are considerably elevated to yield faster oxidation kinetics. In addition, the mixed conductor phase 38 in FIG. 12 can also provide additional electrons pathway for current collection. In absence of the mixed conducting activation layer, only mechanism-1 is prevalent. Under such a circumstance, the oxidation kinetics is completely dominated by the electrical properties of the formed oxide scale and the overall oxidation kinetics is generally slower. Therefore, a layer of activation located at the interface of metal electrode and electrolyte 39 is necessary for an adequately functioning oxide-ion battery cell. The metal electrode is shown as 40 and the scale as 41. However, one of the major issues associated with discharging metal electrode is the volume expansion as the metal is oxidized. In general, the volume expansion is two-to-three-fold depending on the number of oxygen molecules in the oxide. Such a volume change will give rise to potential spallation of metal electrode off the underlying layer, eventually leading possible delamination of the metal electrode. How to eliminate or at least mitigate the spallation problem becomes an important engineering task.

One of the effective technical approaches to solve the spallation problem is to establish the "skeleton" as an extension of the electrolyte, where the skeleton is of a material that conducts both O²⁻ and e' and are stable under both charge and discharge processes. One of the candidate materials is the CeO₂-based oxide-ion conductor that is known to be a mixed conductor at low partial pressure of oxygen. Another good candidate is the mixture of electrolyte material and notable metals, in which both phases are truly volumetrically stable upon redox cycles. FIG. 13 demonstrates how the metal electrode 43 is contained in part within the skeleton 44 of mixed conducting material. The metal oxide scale is shown as 45. The functionality of the skeletal-structured mixed conductor is two-fold. First, the structure is very effective to control volume expanding metal-metal oxide particles and to keep the conducting path uninterrupted. Second, the reactive sites (areas) for mechanism-1 and -2 oxidation processes to occur are significantly increased, giving much faster oxidation kinetics and therefore higher storage capacity. Electrical current 46 is collected via both mixed conducting skeletal structure and metal/metal oxide phase, leading to lowered ohmic resistance.

Another way of solving oxidation-related spallation is to use a separate set of current collector away from the metal electrode. FIG. 14 shows the arrangement of such a concept. The metal oxidation only occurs via gas phase, not solid state electrochemical route. The gaseous O₂ molecules evolved from the interface of electrolyte and interfacial mixed conductor oxidize the metal sponges during discharging process and vice versa during the charging process. Here, the skeleton material is shown as 48, the metal electrode as 49, scale as 50 and current path as 51. The electrical current is collected only through the skeleton material 48. The volume changes in metal and metal oxides during charge/discharge cycle take place in the pores of skeletal structure.

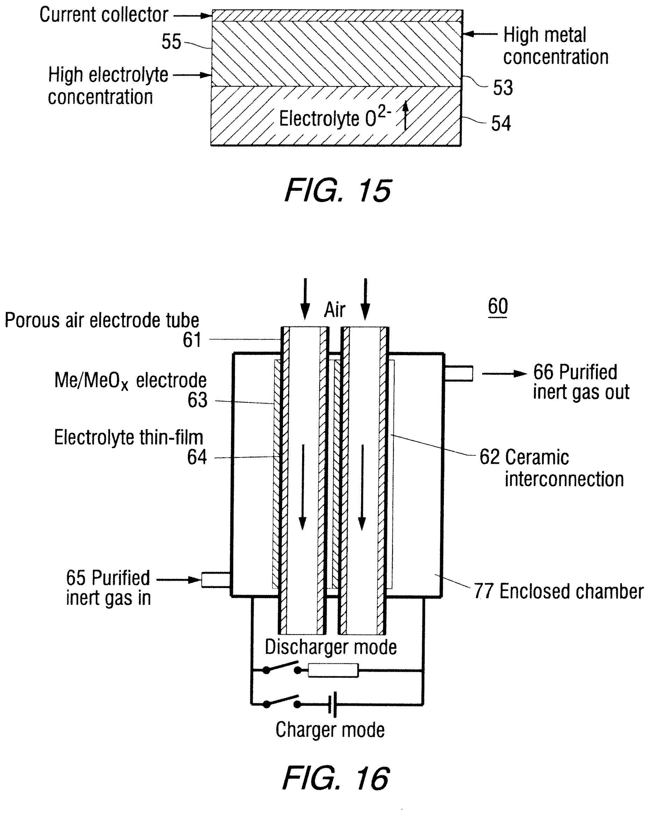

Another way of solving oxidation-related spallation is to use a grading in the concentration of microstructure in the metal electrode. FIG. 15 shows schematically the arrangement of the concept. At the interfacial region 53 close to the electrolyte 54, the concentration of oxide electrolyte phase is higher 70 vol. % to 95 vol. %, above which the oxide phase is gradually diluted, as at location 55, by the metal phase, where electrolyte becomes 25 vol. % to 70 vol. %. The whole structure ends with all metal phase at the outer surface of the metal electrode. With such a structure, the stresses from the oxidation would be alleviated throughout the functional layer.

The techniques available to form the fine skeleton and to deposit the metal electrode particles are critical to realize the above concept. One of them is to use, for example, a plasma spay method to form a well-adhered fine structured mixed electrical conducting skeleton, which a matrix of fine metal constituents, such as, metal electrode particles can be infiltrated by wet chemical method. High surface area nano-size metal particles from 0.01 to 1 micrometer in the matrix would significantly increase the reactivity of the metal electrode. Thus, the skeleton contains fine metal constituents/particles.

Other components of the cells of this invention, referring back to FIG. 2 include an air electrode and an O²⁻ (oxygen ion) conductor/electrolyte. The air electrode 17 is a composite oxide about 10 micrometers to 1000 micrometers thick and can comprise doped and undoped oxides or mixtures of oxides in the perovskite family, such as LaMnO₃, CaMnO₃, LaNiO₃, LaCoO₃, LaCrO₃ doped with conducting mixed oxides of rare earth and/or oxides of Co, Ni, Cu, Fe, Cr, Mn and their combinations.

The electrolyte 18 transfers oxygen ions and is generally a dense, gas tight layer of solid yttria stabilized zirconia about 20 micrometers to 100 micrometers thick.

Referring now to FIGS. 16 and 17, there are many advantages presented by a bank of cells to provide a consolidated oxide-ion battery:
1) The cell bank and module system can be much simplified. Since no gaseous fuels are used, the relevant subsystems of SOFC's, such as reformer, desulfurizer and depleted fuel recirculation loop can be eliminated, resulting in considerable cost reduction. In addition, common combustion of depleted fuel and vitiated air encountered in a SOFC is no longer present. Therefore, the system reliability is also greatly improved.
2) Doubly charged oxide-ion enables the highest theoretical energy density among the existing electrical storage devices.
3) Most metal-metal oxide systems in oxide-ion battery are superior in performance to materials used in lithium-ion battery.
4) All cell and module components are in solid state, from which the battery system requires minimum maintenance.
5) Faster charging and discharging rates that are thermally activated by elevated temperature operation.
6) Reversible Redox reaction at elevated temperatures ensures prolonged lifetime and minimum energy loss during each storage cycle.

At the cell bank and module level, FIG. 16 illustrates schematically the basic repeating two oxide-ion battery cell unit 60, supported by porous air electrode 61, preferably tubular, connected in series via ceramic interconnection 62. The air electrode tubes are once through, that is, with no end cap. The electrode is shown as 63, a thin film electrolyte as 64 and inert gas input and output as 65 and 66, respectively. This design eliminates the use of expensive air feed tubes as are used if the air electrode tube is the one-end closed fashion. Furthermore, FIG. 17 illustrates schematically a basic repeating two oxide-ion battery cell unit 70 based on porous metal substrates, preferably tubes 71. The electrical connection between the two cells is achieved by joining the metal electrode of one cell with the metal substrate of another cell at ambient temperature. Use of metal substrates allows easy enclosure of metal electrode compartment. Conventional welding and brazing techniques can be readily applied to seal the battery cells outer chamber.

The oxide-ion battery of this invention can also be built on a planar geometry module 80, where FIG. 18A shows a sectional view of such a design. Same as the tubular geometry, no fuel or fuel system is required. The substrate of the battery cell can be air electrode cathode 81, metal electrode 82, electrolyte 83 and ferritic stainless steel based metallic interconnect 84 with central oxidant/air channels 85. In FIG. 17, the air electrode is shown as 72, the metallic electrode as 73, electrolyte as film 74 with inert gas input output as 75 and 76, respectively, and dense metal segments as 78. In both FIGS. 16 and 17, an enclosed chamber for the inert gas is shown as 77 and 77'.

In FIG. 18B, a delta type, DELTA/triangular very high density cell 90 is shown. That "triangular configuration" is defined as a cell having a Δ delta zigzag or waves geometry and a hollow interior 91, for oxidant, as set out on FIG. 18B having a flat base 92, the central air through way 91, an optional ceramic air electrode support 93, solid electrolyte 94 interconnector 95, optional nickel or other plating 96 and electrode 97.

Referring back to FIGS. 2 and 3, and reiterating; the charge process is the reversal of the discharge process, that is, oxide-ions in the electrolyte are driven from metal electrode to air electrode under the electrical field. The undergoing electrochemical reactions are expressed by:

At metal electrode: Me_{y}Oₓ + 2xe' = _{y}Me + xO²⁻

At air electrode: xO²⁻ = x/2O₂ + 2xe'

Overall reaction Me_{y}Oₓ = x/2O₂ + yMe

Thermodynamically speaking, the charge and discharge processes should be reversible. However, the real kinetics critically determines the storage capacity and cycling rate of the oxide-ion battery. For the charge process, the kinetics of metal oxides decomposition is lacking, especially under electrical field. The charge and discharge processes could well be irreversible, leading to a slower charging rate, higher energy loss at each storage cycle and therefore lowering electrical efficiency. FIG. 19 shows the schematic of an oxide-ion battery module 110 with a chemical charge concept. In such configuration, the oxide-ion battery is discharged first to allow oxidation of metal in the metallic first electrode 111. After the oxide-ion battery is fully discharged, a gas 115 such as 5% H₂₋N₂ mixture is then flushed into the module chamber. After all metal oxides are transferred into metal, the battery is ready for next discharging again. It is expected that the chemical charging rate is much faster than conventional electrical charging. Here, the air inner electrode is shown as 112, thin film electrolyte as 113. Porous metal tubes 114 are shown supporting the electrodes and electrolyte. Dense tube segment is shown as 116.

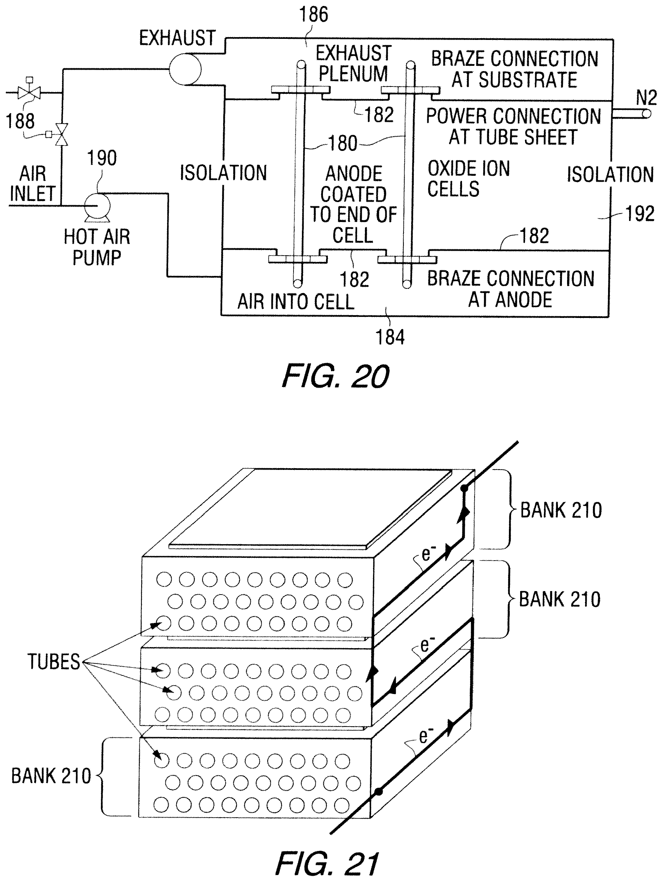

Referring now to FIG. 20, an overall schematic diagram of a cell groups, forming a bank of cells, with at least two cells is shown in detail.

In this system, a plurality of oxide-ion cells are integrated into a useful power bank. FIG. 20 shows the mechanical concept of integrating the oxide ion cells into a useful power bank. The cells 180 would be mechanically and electrically connected to the tube sheets 182. This connection could be made by brazing the cells to the sheets.

The metal supported cells 180 would be manufactured to have an air electrode attachment point available on one side of the cell and a metallic electrode attachment point available on the opposite end of the cell. Having electrodes on both sides of the cell simplifies the electrical connections between the cells. One tube sheet would connect all the cell's air electrodes together while the opposite tube sheet connects all the metallic electrodes together. These tube sheets create an isolation zone between them. This places all the battery cells in electrical parallel. The tube sheets must be electrically isolated from each other through gasketing. Each tube sheet becomes an electrical conductor for the battery current.

Air flows through the center of the oxide ion cell that provides oxygen to be ionized in the discharge mode. Air enters the cell through an air plenum 184 that provides equal air flow to each of the cells. The air not only provides oxygen for the electrochemical reaction but also provides cooling to the cells since the discharge chemical reaction liberates heat that must be removed from the cells. After the vitiated air leaves the cells, it is collected in an exhaust plenum 186. The exhaust plenum also ensures that each cell yields an equal amount of exhaust flow. The hot exhaust is collected in the plenum and then piped to mixing valves. Vitiated hot exhaust air is mixed with incoming fresh air to preheat the mixed gas before it enters the air inlet plenum 184. The air needs to be preheated to minimize the axial temperature gradient across the cells. The preheat temperature is controlled by the amount of exhaust flow mixed with the incoming air which is controlled by two valves 188 and a recirculation blower 190. This air electrode exhaust recirculation avoids the need for an external air/exhaust recuperator.

An oxygen free gas needs to be provided to the isolation volume/zone and thus to the metallic electrode of the oxide ion cell to prevent non-electrochemical oxidization of this electrode. Nitrogen gas along with an oxygen getter could be used to provide the oxygen free environment. The nitrogen (N₂) plenum 192 provides this environment. The plenum would be initially charged with Nitrogen. This plenum should be leak tight, but make up nitrogen may be required if small leaks are present. The present battery bank concept requires that the metallic electrode must be kept in an oxygen free environment to prevent non electrochemical oxidization of the metallic electrode. This oxygen free environment requires that a separate plenum be built into the battery bank and that this plenum be as leak tight as possible. In addition, this plenum may need to be charged with an oxygen free gas to protect the battery cell metallic electrode. This plenum and gas complicate the design of the battery system and add cost. One way to eliminate the need for the plenum and oxygen free gas would be to coat the metallic electrode with a gas tight layer that would prevent the air inside the battery bank from oxidizing the metallic electrode. Therefore, only oxide that travels through the electrolyte layer would be involved in the oxidization of the metallic electrode. One such example of a gas tight thin layer that could be applied to the metallic electrode would be Scandia-doped Zirconia. This is the same material that may be used in the battery cell electrolyte. This layer could be applied with a plasma spray process. A set of electrically parallel oxide ion cells will be grouped into a bank. The number of cells in each bank will be determined by the electrical current required by the battery system. Banks of cells will then be connected in electrical series to develop higher battery voltages. Each bank of cells will then be electrically connected to only one side of the previous bank. The other end will be isolated electrically from the previous bank to ensure a series electrical arrangement.

FIG. 21 shows a concept for a bank of cells with each bank connected in electrical series to build up the battery operating voltage. Each end of the bank is connected electrically to the next bank on one side. The tube sheets act as electrical conductors transferring the electrical current between banks. The opposite end of the bank is isolated electrically from the previous bank. Three banks 210 are shown as an example where electron flow e' is shown by paths.

Another novel concept would be the use of integrated thermal storage. In discharge mode, the oxide ion cell reaction is exothermic and liberates heat. In the charging mode, the cell reaction is endothermic and requires heat. If the N₂ plenum 192 were filled with a thermal storage media, this media could absorb heat while the cells are discharging and provide this heat back to the cells during charge mode. This heat storage concept would greatly improve the overall efficiency of the battery system.

Additional advantages of the bank of cells of this invention includes:
1) Importantly, no gaseous fuels are used.
2) A high density, low cost oxide ion battery module configuration construction technique similar to mass produced shell and tube heat exchangers.
3) The battery module will consist of parallel current path battery banks that are connected in electrical series to develop higher voltage.
4) Low cost brazed seal between battery cell and tube sheet; this seal provides for a mechanical connection, electrical connection and seal between the air environment and oxygen free environment.
5) Tube sheet collect current, supports weight of cell, and facilities brazing cell.
6) Allows for inert environment on metallic electrode side of battery cell if required to prevent nonelectrochemical oxidization.
7) Exhaust air recycle to preheat fresh incoming air.
8) Thermal storage between charge and discharge cycle.
9) Case material is the same as the battery tube substrate to accommodate thermal expansion.
10) Current path through the tube substrate; eliminates bundling of battery cells which increases yield, eliminate an expensive process step and therefore reduces cost.
11) Eliminates the need for the interconnection layer deposited on the battery cell which eliminates an expensive process step, improves yield and therefore reduces cost.
12) Low cost isolation material between tube sheet electrodes.
13) Operating temperature of 550°C to 650°C allows for use of low cost stainless steel materials for module construction.
14) Once through air design; eliminates air feed tubes, simplifies module design, reduces the number of module parts.
15) Possible to use configuration to directly heat the incoming air through a mechanical heat exchange process if required.

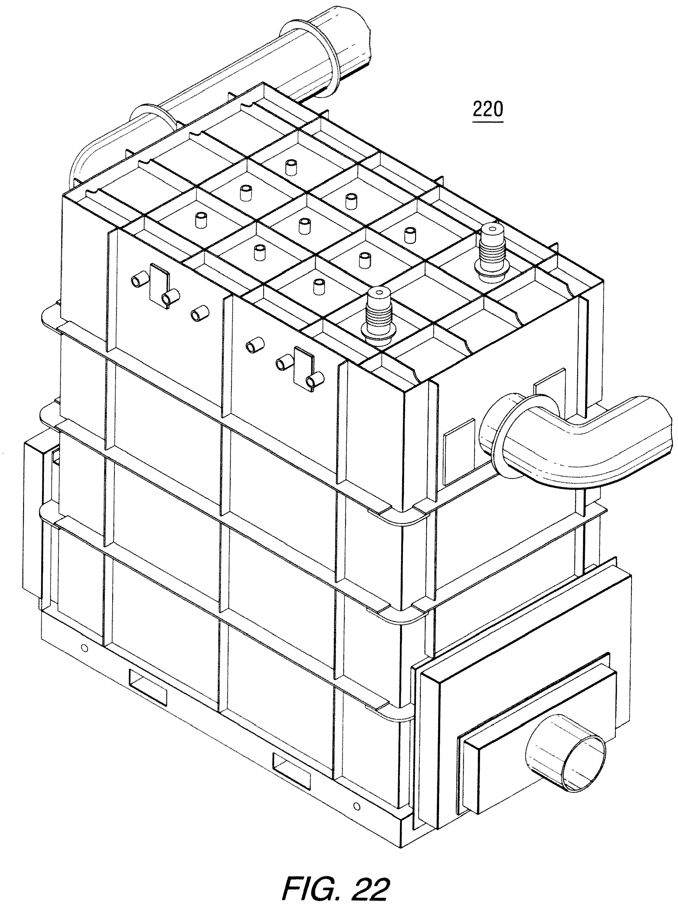

FIG. 22 shows a module 220 which could be used to house up to about 500 banks of cells. In one embodiment module dimensions would be 3.4m height x 3.7 m width x 1.9 m depth.

There is a great need for electrical energy storage. The storage sizes needed range from milliwatts for smart-card devices to multiple-megawatts for large load-leveling sub-stations. The rechargeable oxide ion battery described herein can supply the power storage needs for various electronic components, transportation, load leveling, power quality and commercialization of renewable resources such as solar and wind power. These renewable energy sources tend to fluctuate continuously, yet society requires a steady, dependable supply of electrical energy. The solution is the development of a grid-scale, efficient and affordable oxide ion battery electrical energy storage network, where energy can be locally stored and distributed in anticipation of supply and demand. Such a system would completely revolutionize the electrical utility business.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention which is to be given the full breadth of the appended claims.

## Claims

1. An electrical storage device comprising a solid anion conducting electrolyte and two electrodes, where there is O²⁻ ion transfer between the electrodes on either side of the electrolyte, where one electrode is a reservoir for O²⁻ ions and where O²⁻ ions can be transferred back and forth between the electrodes,
wherein one of the electrodes is a metallic electrode and the other thereof is a gas electrode, and wherein the metallic electrode is the reservoir for O²⁻ ions,
wherein the electrical storage device further comprises a skeletal structure of material that conducts O²⁻ ions and electrons, wherein the skeletal structure extends from the electrolyte, wherein the metallic electrode is contained in part within the skeletal structure.

2. The electrical storage device of Claim 1, where O²⁻ ions transfer back and forth between the electrodes, when the device is in charging and discharging modes, and no gaseous fuels are used.

3. A bank of cells with a plurality of electrically connected electrical storage devices as claimed in Claim 1.

4. A battery cell with an electrical storage device as claimed in Claim 1, wherein the gas electrode is an air electrode, and wherein the cell is capable of operating in charging and discharging modes, to store electrical energy in the metallic electrode, where, the discharging mode is:
yMe + x/2 O2 = Me_{y}Oₓ
and the charging mode is:
Me_{y}Oₓ = x/2 O2 + yMe,
and where x/y = 0.5 to 3.0 and Me = metal.

5. The battery cell of Claim 4, wherein the metallic electrode is selected from the group consisting of Fe-FeO, Mn-Mn₂O₃, W-WO₃ and Mo-MoO₂.

6. The battery cell of claim 4, wherein the metallic electrode is comprised of a two metals formed alloy and a two oxides formed solid solution.

7. The bank of cells as claimed in claim 3 where the electrical storage devices are solid or hollow elongated tubular cells, each cell capable of operating in charging and discharging modes, the metallic electrode of each cell comprising a single-phase or two-phase metallic material which can be oxidized, having a melting point over 400°C, and, the gas electrode of each cell comprising a material which can transfer air to the electrolyte of the cell, where the discharging mode is:
yMe + x/2 O2 = Mey0x,
and the charging mode is:
Me_{y}Oₓ = x/2 O2 + yMe,
where x/y = 0.5 to 3.0, Me = metal, and where the bank of cells store electrical energy, and have a source of air to contact the material of the gas electrode.

8. The bank of cells of Claim 7, wherein the metallic electrode has a melting point over 500°C, no gaseous fuels are used, and the solid elongated tubular cells can have any geometric shape in cross-section.

9. The bank of cells of Claim 7, where the gas electrode can be any solid phase that holds a fixed partial pressure of oxygen at a fixed temperature.

10. The battery cell of claim 4 or the bank of cells of Claim 7, wherein the metallic electrode is comprised of any single-phase metallic material selected from the group consisting of Sc, Y, La, Ti, Zr, Hf, Ce, Cr, Mn, Fe, Co, Ni, Cu, Nb, Ta, V, Mo, Pd and W, and of any two-phase material selected from the group consisting of Sc-Sc₂O₃, Y-Y₂O₃, La-La₂O₃, Ti-TiO₂, 2r-2rO₂, Hf-HfO₂, Ce-CeO₂, Cr-Cr₂O₃, Mn-Mn₂O₃, Mn-Mn₃O₄, Mn-MnO, Fe-FeO, Fe-Fe₃O₄, Fe-Fe₂O₃, Co-CoO, Co-C0₃O₄, Co-Co₂O₃, Ni-NiO, Cu-Cu₂O, Cu-CuO, Nb-NbO, Nb-NbO₂, Nb-Nb₂O₅, Ta-Ta₂O₅, V-V₂O₅, V-VO₂, V-V₂O₃, V-VO, Mo-MoO₂, Mo-MoO₃, Pd-PdO and W-WO₃.

11. The battery cell of claim 10, or the bank of cells of Claim 10, wherein in the two-phase material, the metal-to-metal oxide ratio ranges from 0:100 to 100:0, and no gaseous fuels are used.

12. The battery cell of claim 4, or the bank of cells of Claim 7, wherein the metallic electrode is comprised of any single-phase metallic material selected from the group consisting of Ti, Cr, Mn, Fe, Co, Ni, Cu, Mo and W, and of any two-phase metallic material selected from the group consisting of Ti-TiO₂, Cr-Cr₂O₃, Mn-Mn₂O₃, Fe-FeO, Co-CoO, Ni-NiO, Cu-Cu₂O, Mo-MoO₂ and W-WO₃.

13. The battery cell of claim 4, or the bank of cells of Claim 7, wherein the metallic electrode is comprised of any single-phase metallic material selected from the group consisting of Mn, Fe, Mo and W, and of any two-phase metallic material selected from the group consisting of Mn-Mn₂O₃, Fe-FeO, Mo-MoO₂ and W-WO₃.

## Patentansprüche

1. Elektrische Speichervorrichtung, die einen anionenleitenden Festelektrolyt und zwei Elektroden umfasst, wobei ein O²⁻-Ionen-Transfer zwischen den Elektroden beiderseits des Elektrolyten stattfindet, wobei eine Elektrode ein Reservoir für O²⁻-Ionen ist und wobei O²⁻-Ionen zwischen den Elektroden zurück und vor transportiert werden können,
wobei eine der Elektroden eine metallische Elektrode ist und die andere von ihnen eine Gaselektrode ist, und wobei die metallische Elektrode das Reservoir für O²⁻-Ionen ist,
wobei die elektrische Speichervorrichtung ferner eine Skelettstruktur von Material umfasst, welches O²⁻-Ionen und Elektronen leitet, wobei sich die Skelettstruktur von dem Elektrolyten aus erstreckt, wobei die metallische Elektrode zum Teil innerhalb der Skelettstruktur enthalten ist.

2. Elektrische Speichervorrichtung nach Anspruch 1, wobei O²⁻-Ionen zwischen den Elektroden zurück und vor wandern, wenn sich die Vorrichtung in Lade- und Entlade-Betriebsarten befindet, und keine gasförmigen Brennstoffe verwendet werden.

3. Bank von Zellen mit einer Vielzahl elektrisch verbundener elektrischer Speichervorrichtungen nach Anspruch 1.

4. Batteriezelle mit einer elektrischen Speichervorrichtung nach Anspruch 1, wobei die Gaselektrode eine Luftelektrode ist und wobei die Zelle in einer Lade- und einer Entlade-Betriebsart betrieben werden kann, um elektrische Energie in der metallischen Elektrode zu speichern, wobei die Entlade-Betriebsart beinhaltet:
yMe + x/2 O2 = Me_{y}Oₓ
und die Lade-Betriebsart beinhaltet:
Me_{y}Oₓ = x/2 O2 + yMe,
und wobei x/y = 0,5 bis 3,0 und Me = Metall ist.

5. Batteriezelle nach Anspruch 4, wobei die metallische Elektrode aus der Gruppe ausgewählt ist, welche aus Fe-FeO, Mn-Mn₂O, W-WO₃ und Mo-MoO₂ besteht.

6. Batteriezelle nach Anspruch 4, wobei die metallische Elektrode aus einer aus zwei Metallen gebildeten Legierung und einer aus zwei Oxiden gebildeten Feststofflösung besteht.

7. Bank von Zellen nach Anspruch 3, wobei die elektrischen Speichervorrichtungen massive oder hohle lang gestreckte rohrförmige Zellen sind, wobei jede Zelle in der Lage ist, in einer Lade- und einer Entlade-Betriebsart betrieben zu werden, wobei die metallische Elektrode jeder Zelle ein einphasiges oder zweiphasiges metallisches Material umfasst, welches oxidiert werden kann, wobei es einen Schmelzpunkt über 400 °C aufweist, und wobei die Gaselektrode jeder Zelle ein Material umfasst, welches Luft zu dem Elektrolyten der Zelle transportieren kann, wobei die Entlade-Betriebsart beinhaltet:
yMe + x/2 O2 = Me_{y}Oₓ
und die Lade-Betriebsart beinhaltet:
Me_{y}Oₓ = x/2 O2 + yMe,
wobei x/y = 0,5 bis 3,0, Me = Metall ist und wobei die Zellen der Bank von Zellen elektrische Energie speichern und eine Quelle von Luft aufweisen, um mit dem Material der Gaselektrode in Kontakt zu kommen.

8. Bank von Zellen nach Anspruch 7, wobei die metallische Elektrode einen Schmelzpunkt über 500 °C aufweist, keine gasförmigen Brennstoffe verwendet werden und die massiven lang gestreckten rohrförmigen Zellen im Querschnitt eine beliebige geometrische Form aufweisen können.

9. Bank von Zellen nach Anspruch 7, wobei die Gaselektrode eine beliebige feste Phase aufweisen kann, welche einen festen Partialdruck von Sauerstoff bei einer festen Temperatur hält.

10. Batteriezelle nach Anspruch 4 oder Bank von Zellen nach Anspruch 7, wobei die metallische Elektrode aus einem beliebigen einphasigen metallischen Material besteht, das aus der Gruppe ausgewählt ist, welche aus Sc, Y, La, Ti, Zr, Hf, Ce, Cr, Mn, Fe, Co, Ni, Cu, Nb, Ta, V, Mo, Pd und W besteht, und aus einem beliebigen zweiphasigen Material, das aus der Gruppe ausgewählt ist, welche aus Sc-Sc₂O₃, Y-Y₂O₃, La-La₂O₃, Ti-TiO₂, 2r-2rO₂, Hf-HfO₂, Ce-CeO₂, Cr-Cr₂O₃, Mn-Mn₂O₃, Mn-Mn₃O₄, Mn-MnO, Fe-FeO, Fe-Fe₃O₄, Fe-Fe₂O₃, Co-CoO, Co-Co₃O₄, Co-Co₂O₃, Ni-NiO, Cu-Cu₂O, Cu-CuO, Nb-NbO, Nb-NbO₂, Nb-Nb₂O₅, Ta-Ta₂O₅, V-V₂O₅, V-VO₂, V-V₂O₃, V-VO, Mo-MoO₂, Mo-MoO₃, Pd-PdO und W-WO₃ besteht.

11. Batteriezelle nach Anspruch 10 oder Bank von Zellen nach Anspruch 10, wobei in dem zweiphasigen Material das Verhältnis von Metall zu Metalloxid im Bereich von 0:100 bis 100:0 liegt und keine gasförmigen Brennstoffe verwendet werden.

12. Batteriezelle nach Anspruch 4 oder Bank von Zellen nach Anspruch 7, wobei die metallische Elektrode aus einem beliebigen einphasigen metallischen Material besteht, das aus der Gruppe ausgewählt ist, welche aus Ti, Cr, Mn, Fe, Co, Ni, Cu, Mo und W besteht, und aus einem beliebigen zweiphasigen metallischen Material, das aus der Gruppe ausgewählt ist, welche aus Ti-TiO₂, Cr-Cr₂O₃, Mn-Mn₂O₃, Fe-FeO, Co-CoO, Ni-NiO, Cu-Cu₂O, Mo-MoO₂ und W-WO₃ besteht.

13. Batteriezelle nach Anspruch 4 oder Bank von Zellen nach Anspruch 7, wobei die metallische Elektrode aus einem beliebigen einphasigen metallischen Material besteht, das aus der Gruppe ausgewählt ist, welche aus Mn, Fe, Mo und W besteht, und aus einem beliebigen zweiphasigen metallischen Material, das aus der Gruppe ausgewählt ist, welche aus Mn-Mn₂O₃, Fe-FeO, Mo-MoO₂ und W-WO₃ besteht.

## Revendications

1. Dispositif de stockage d'électricité comprenant un électrolyte conducteur anionique solide et deux électrodes, sachant qu'il y a un transfert d'ions O²⁻ entre les électrodes des deux côtés de l'électrolyte, qu'une électrode est un réservoir d'ions O²⁻ et que les ions O²⁻ peuvent être transférés par va-et-vient entre les électrodes,
étant entendu que l'une des électrodes est une électrode métallique et que l'autre est une électrode à gaz, et étant entendu que l'électrode métallique est le réservoir d'ions O²⁻ ;
étant entendu que le dispositif de stockage d'électricité comprend par ailleurs une structure formant squelette en un matériau qui conduit les ions O²⁻ et les électrons, que la structure formant squelette s'étend depuis l'électrolyte, que l'électrode métallique est contenue en partie à l'intérieur de la structure formant squelette.

2. Dispositif de stockage d'électricité selon la revendication 1, dans lequel les ions O²⁻ sont transférés par va-et-vient entre les électrodes lorsque le dispositif est dans les modes de charge et de décharge, et aucun combustible gazeux n'est utilisé.

3. Banc d'éléments comportant une pluralité de dispositifs de stockage d'électricité selon la revendication 1, reliés électriquement.

4. Élément de batterie comportant un dispositif de stockage d'électricité selon la revendication 1, étant entendu que l'électrode à gaz est une électrode à air et que l'élément est capable de fonctionner dans les modes de charge et de décharge pour stocker de l'énergie électrique dans l'électrode métallique, sachant que le mode de décharge s'écrit :
yMe + x/2 O₂ = MeyOx,
et que le mode de charge s'écrit :
Me_{y}Oₓ = x/2 O₂ + yMe,
et où x/y = 0,5 à 3,0 et Me = métal.

5. Élément de batterie selon la revendication 4, dans lequel l'électrode métallique est sélectionnée dans le groupe constitué de Fe-FeO, Mn-Mn₂O₃, W-WO₃ et Mo-MoO₂.

6. Élément de batterie selon la revendication 4, dans lequel l'électrode métallique est composée d'un alliage formé de deux métaux et d'une solution solide formée de deux oxydes.

7. Banc d'éléments selon la revendication 3 sachant que les dispositifs de stockage d'électricité sont des éléments tubulaires allongés pleins ou creux, chaque élément étant capable de fonctionner dans les modes de charge et de décharge, l'électrode métallique de chaque élément comprenant un matériau métallique monophasé ou biphasé qui peut être oxydé, ayant un point de fusion supérieur à 400 °C, et l'électrode à gaz de chaque élément comprenant un matériau qui peut transférer de l'air à l'électrolyte de l'élément, sachant que le mode de décharge s'écrit :
yMe + x/2 O₂ = MeyOx,
et que le mode de charge s'écrit :
Me_{y}Oₓ = x/2 O₂ + yMe,
où x/y = 0,5 à 3,0, Me = métal, et sachant que le banc d'éléments stocke de l'énergie électrique et comporte une source d'air à mettre en contact avec le matériau de l'électrode à gaz.

8. Banc d'éléments selon la revendication 7, dans lequel l'électrode métallique a un point de fusion supérieur à 500 °C, aucun combustible gazeux n'est utilisé et les éléments tubulaires allongés pleins peuvent avoir une section transversale d'une forme géométrique quelconque.

9. Banc d'éléments selon la revendication 7, sachant que l'électrode à gaz peut être une phase solide quelconque qui conserve une pression partielle d'oxygène fixe à une température fixe.

10. Élément de batterie selon la revendication 4 ou banc d'éléments selon la revendication 7, dans lequel l'électrode métallique est composée d'un matériau métallique monophasé quelconque sélectionné dans le groupe constitué du Sc, de l'Y, du La, du Ti, du Zr, du Hf, du Ce, du Cr, du Mn, du Fe, du Co, du Ni, du Cu, du Nb, du Ta, du V, du Mo, du Pd et du W, et d'un matériau biphasé quelconque sélectionné dans le groupe constitué du Sc-Sc₂O₃, Y-Y₂O₃, La-La₂O₃, Ti-TiO₂, 2r-2rO₂, Hf-HfO₂, Ce-CeO₂, Cr-Cr₂O₃, Mn-Mn₂O₃, Mn-Mn₃O₄, Mn-MnO, Fe-FeO, Fe-Fe₃O₄, Fe-Fe₂O₃, Co-CoO, Co-Co₃O₄, Co-Co₂O₃, Ni-NiO, Cu-Cu₂O, Cu-CuO, Nb-NbO, Nb-NbO₂, Nb-Nb₂O₅, Ta-Ta₂O₅, V-V₂O₅, V-VO₂, V-V₂O₃, V-VO, Mo-MoO₂, Mo-MoO₃, Pd-PdO et W-WO₃.

11. Élément de batterie selon la revendication 10 ou banc d'éléments selon la revendication 10, dans lequel, dans le matériau biphasé, le rapport métal-oxyde métallique va de 0:100 à 100:0 et aucun combustible gazeux n'est utilisé.

12. Élément de batterie selon la revendication 4 ou banc d'éléments selon la revendication 7, dans lequel l'électrode métallique est composée d'un matériau métallique monophasé quelconque sélectionné dans le groupe constitué du Ti, du Cr, du Mn, du Fe, du Co, du Ni, du Cu, du Mo et du W, et d'un matériau métallique biphasé quelconque sélectionné dans le groupe constitué de Ti-TiO₂, Cr-Cr₂O₃, Mn-Mn₂O₃, Fe-FeO, Co-CoO, Ni-NiO, Cu-Cu₂O, Mo-MoO₂ et W-WO₃.

13. Élément de batterie selon la revendication 4 ou banc d'éléments selon la revendication 7, dans lequel l'électrode métallique est composée d'un matériau métallique monophasé quelconque sélectionné dans le groupe constitué du Mn, du Fe, du Mo et du W, et d'un matériau métallique biphasé quelconque sélectionné dans le groupe constitué de Mn-Mn₂O₃, Fe-FeO, Mo-MoO₂ et W-WO₃.
